# EUROPEAN PATENT APPLICATION

(11) **EP 1 643 698 A2**
(43) Date of publication of application: **05.04.2006**
(21) Application number: 05108594.2
(22) Date of filing: 19.09.2005
(51) Int. Cl.: H04L 12/56

(54) **A method and apparatus for assembling data packet fragments in a network of nodes**

(30) Priority: 02.10.2004 GB 0421948
(71) Applicant: Hewlett-Packard Development Company, L.P., Houston, Texas 77070 (US)
(72) Inventor: Mutnuri, Rishi Kaundinya, 560052 IN, Karnataka (IN); Tatapudi, Timothy Noel, 560052, Karnataka (IN); Vepakomma, Diwakar Rao, 560052, Karnataka (IN)
(74) Representative: Lloyd, Richard Graham

(57) **Abstract**

A method and apparatus is disclosed for assembling data packet fragments in a network of nodes arranged as a subnet cluster in which the overhead in reassembling and transmitting packets within the cluster is reduced.

## Description

### Field of Invention

The present invention relates to a method and apparatus for assembling data packet fragments in a network of nodes. More particularly, but not exclusively, the present invention relates to reassembling packet fragments in a subnet cluster, which reduces the resources required for the reassembly process.

### Background of the Invention

A cluster is formed by a grouping of networked elements such as server computers systems and storage devices that co-operate so as to provide a single system. A cluster has a single network or IP (Internet Protocol) address which is used by network elements outside the cluster to address any element within the cluster. This single IP address is called the cluster alias and provides the illusion that the cluster is a single node providing a single set of services. Cluster elements have their own inter cluster network connections in addition to the connection between the cluster as a whole and an external network. As a result, clusters are commonly referred to as a subnet clusters.

Subnet clusters have two categories which are distinguished by the way in which the cluster alias is configured. The first category is referred to as a common subnet where the cluster alias is configured from the same subnet as existing cluster node addresses, and is associated with an existing network interface on a cluster node. In a common subnet cluster all the data packets addressed to the cluster alias IP address will arrive at the designated network interface node in the cluster. The second category is referred to as a virtual subnet where the cluster alias is configured as a unique new subnet and one or more cluster members advertise the subnet over the network. In virtual subnet mode, data packets can arrive at any of the cluster nodes that advertise the cluster alias.

Data packets transmitted across a network are often split up or fragmented. For example, if during the routing process, the packet size created by the network transport layer exceeds the packet size that the datalink layer can accommodate, then the packet will be split into suitably sized fragments. In some cases packet fragmentation is common and therefore needs to be handled efficiently. If path splitting occurs in the network then there is no guarantee that all fragments of a given packet will be received at their destination in the correct order or that the first fragment sent will be the first fragment delivered. Also, if path splitting occurs where the destination is a virtual subnet cluster, then all fragments may not be delivered to the same cluster node. When a packet is split into fragments, each fragment is assigned a fragment identifier which, in combination with source IP address, uniquely identifies each fragment in the network.

In common subnet clusters, all fragments (all packets in general) arrive at the network interface node and are reassembled there. The assembled packet is then routed to a specific node hosting the application to which the packet is originally destined. Fragmented packets received by a virtual subnet cluster are reassembled on a designated reassembly node within the cluster. All received fragments for a packet are forwarded to the designated reassembly node by the creation of a mapping between the fragment identifier and the assembly node identifier. The IP packet is reassembled at that internal node and then routed to the node hosting the application to which the packet is actually destined.

In a virtual subnet cluster, if a large proportion of incoming packets are fragmented then the performance of the cluster can suffer due to the extra subnet traffic generated by moving the fragments to the reassembly node. This situation leads to poor utilisation of both the cluster member resources and cluster interconnects. Furthermore, the time to live (TTL) field of the IP packet can expire because of the extra time required for moving the fragments to the reassembly node before the original packet is reconstructed.

The reassembly system in virtual subnet clusters does not scale well with respect to the amount of traffic received. In cases where heavy traffic is received by the cluster, the amount of extra traffic generated on the cluster interconnect due to transmissions of packets after reassembly can be high. This extra traffic can affect the performance of the cluster interconnect near the reassembly node and thus affect the performance of other kernel traffic being sent over the cluster interconnect. Also, as the size of a cluster increases, the probability the reassembly of a packet being carried out on the destination node for the packet is reduced.

It is an object of the invention to improve the performance of the reassembly process.

It is an object of the present invention to provide a method or apparatus for assembling data packet fragments in a network of nodes, which avoids some of the above disadvantages or at least provides the public with a useful choice.

### Summary of the Invention

According to a first aspect of the invention there is provided a method for assembling data packet fragments in a network of nodes, the method comprising the steps of:
a) receiving the first fragment of a data packet at a first node in the network;
b) inspecting the first fragment and determining the intended destination node of the fragment; and
c) sending the fragment to the destination node for reassembly at the destination node.

Preferably the method further comprising the steps of: d) making a record of the destination node and a unique identifier for the fragment; and e) using the record to direct other fragments of the data packet to the destination node for reassembly. Preferably the method further comprising the step of: f) if the other fragments of the packet are received at the first node before the first fragment then storing the other fragments in a buffer until the first fragment is received. Preferably the method further comprising the step of: g) if the first fragment is not received for a predetermined period then clearing the other fragments from the buffer.

Preferably the network of nodes is a network of computers arranged as a subnet cluster. Preferably the network of nodes is a network of computers arranged as a virtual subnet cluster. Preferably the virtual subnet cluster is provided by HP-UX™ Trucluster™ software. Preferably the data packet is an Internet Protocol (IP) datagram.

According to a second aspect of the invention there is provided apparatus for assembling data packet fragments in a network of nodes, the apparatus comprising:
a) receiving means for receiving the first fragment of a data packet at a first node in the network;
b) inspecting means for inspecting the first fragment and determining the intended destination node of the fragment; and
c) forwarding means for sending the fragment to the destination node for reassembly at the destination node.

According to a third aspect of the invention there is provided a computer program or suite of computer programs arranged to enable a computer or a group of computers to carry out a method for assembling data packet fragments in a network of nodes, the method comprising the steps of:
a) receiving the first fragment of a data packet at a first node in the network;
b) inspecting the first fragment and determining the intended destination node of the fragment; and
c) sending the fragment to the destination node for reassembly at the destination node.

According to a fourth aspect of the invention there is provided a computer program or suite of computer programs arranged to enable a computer or a group of computers to provide the apparatus for assembling data packet fragments in a network of nodes, the apparatus comprising:
a) receiving means for receiving the first fragment of a data packet at a first node in the network;
b) inspecting means for inspecting the first fragment and determining the intended destination node of the fragment; and
c) forwarding means for sending the fragment to the destination node for reassembly at the destination node.

According to a fifth aspect of the invention there is provided a method reassembling packet fragments in a subnet cluster, the method comprising the steps of:
a) receiving the first packet fragment at a first node in the cluster;
b) inspecting the first fragment and determining the intended destination node of the fragment in the cluster;
c) sending the fragment to the destination node for reassembly at the destination node.
d) making a record of the destination node and a unique identifier for the fragment; and
e) using the record to direct other fragments of the data packet to the destination node for reassembly.

Preferably the method further comprising the step of: f) if the other fragments of the packet are received at the first node before the first fragment then storing the other fragments in a buffer until the first fragment is received.

According to a sixth aspect of the invention there is provided apparatus for reassembling packet fragments in a subnet cluster, the apparatus comprising:
a) a packet receiver for receiving packet fragments at a first node in the cluster;
b) a packet handler operable:
   to identify the first fragment of a packet and to determining the intended destination node of the first fragment in the cluster;
   to make a record of the destination node and a unique identifier for the first fragment;
   to use the record to identify other fragments of the data packet and to direct the other fragments to the destination node for reassembly; and
c) a packet forwarder operable to send received fragments to the destination node for reassembly at the destination node;

According to a seventh aspect of the invention there is provided a method of operating a cluster alias router node for a subnet cluster, the method comprising the steps of:
a) receiving a packet fragment
b) inspecting the fragment and if the fragment is the first fragment for the packet, determining the intended destination node of the first fragment in the cluster;
c) making a record of the destination node, source address, protocol identifier and fragment identifier for the first fragment; and
d) sending the fragment to the destination node for reassembly at the node; and
e) in response to each other fragment of the packet being received, using the record to direct each other fragment to the destination node for reassembly.

According to an eighth aspect of the invention there is provided a cluster alias router node for a subnet cluster comprising:
a) an IP interrupt handler for receiving a packet fragment
b) a packet handler operable to inspect the fragment and if the fragment is the first fragment for the packet, to determine the intended destination node of the first fragment in the cluster;
c) a database operable to make a record of the destination node, source address, protocol identifier and fragment identifier for the first fragment;
d) a packet forwarder operable to send the fragment to the destination node for reassembly at the node; and
e) the packet handler being further operable in response to each other fragment of the packet being received to use the record to direct each other fragment to the destination node for reassembly.

### Brief Description of the Drawings

Embodiments of the invention will now be described, by way of example only, with reference to the accompanying drawings in which:
Figure 1 is a schematic illustration of a network of computers arranged as a subnet cluster; and
Figure 2 is a flow chart illustrating the operation of one of the computers of figure 1.

### Detailed Description of a Preferred Embodiment of the Invention

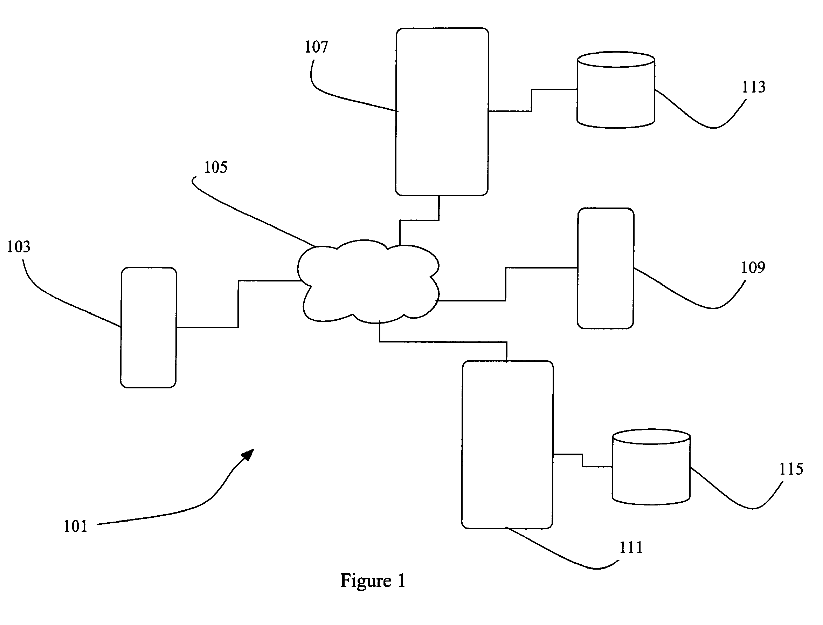

With reference to figure 1, a computer network 101 comprising a client computer 103 is connected via a network 105 to a first sever computer 107, a second server computer 109 and a third server computer 111. The first and third server computers 107, 111 are also connected to respective data storage systems 113, 115.

The client computer 103 is installed with a version of the Linux™ operating system and a number of application programs including an internet browser. The server computers 107, 109, 111 are installed with the Unix™ operating system and each provides one or more services over the network such as database services or web page services. The server computers 107, 109, 111 are also installed with cluster software such as HP-UX™ Trucluster™ which enables the servers to act together as the nodes of a virtual subnet cluster.

The second server 109 provides the network interface for the subnet cluster and broadcasts the cluster alias address, that is, the IP network address that directs data to the subnet but that does not specify any particular computer within the cluster. The network interface function is provided by a module of the Trucluster™ software called the IP interrupt handler. This module receives IP packet fragments, analyses and filters them according to whether they are addressed to the local node or are to be forwarded to a different node. The filtering carried out by the IP interrupt handler distinguishes data packet fragments destined for the cluster from those for other destinations. Data packets or their fragments that are destined for the cluster are passed for further processing to a cluster alias network interface.

The cluster alias network interface (CANI) provides cluster alias address pre-processing at the network, transport and application layers, and its primary function is to determine which node in the cluster should process a given packet. The CANI parses the packet fragments and determines which cluster node should receive it. If the destination node is the local node, the packet is placed on the local network stack. If the destination node is not the local node, packets are tunnelled to the destination node over the network 103 via a cluster interconnect provided by the interconnect subsystem (ICS).

When the client computer 101 specifies the cluster alias as the address of a requested service, the cluster alias address is used as the target IP address in the data packet that is forwarded across the network 105. The packet arrives at the node in the cluster that is advertising the address, that is the second server 109. In the network interface of the second server 109, the cluster alias address is tagged in a list of local addresses and not associated with a physical network interconnect. When the destination address of the received packet is matched up with a local address, the packet is passed to the CANI for further processing. The CANI is arranged to route all IP fragments to their destination cluster node and to provide the fragment to the application layer running on that node. This enables the reassembly of the fragments into the original packet to be carried out on the node in the cluster which is the destination of the packet.

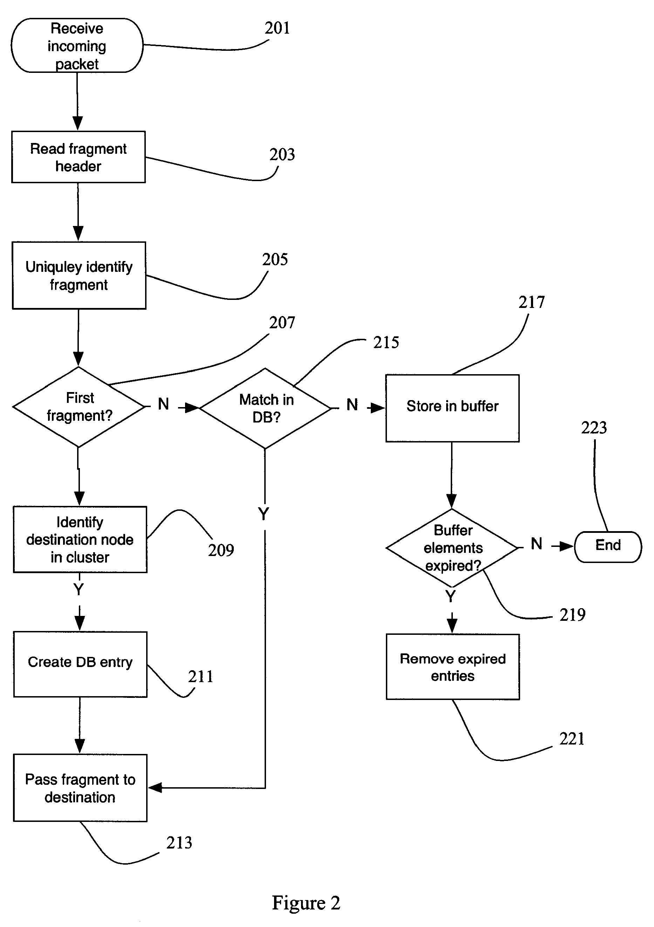

The process carried out by the CANI will now be described with reference to figure 2 in which at step 201 a fragment is received and processing moves to step 203. At step 203, the fragment header is read and at step 205, the CANI extracts the source address, protocol and fragment identifier from the header to uniquely identify the fragment. Processing then moves to step 207 where is is determined whether or not the fragment is the first fragment of the packet and if so processing moves to step 209.

If the fragment is the first fragment of a packet then the header includes the source, destination, ports, and application to which the packet belongs. Using these parameters and data in the dynamic socket table, the CANI determines the cluster node hosting the application which is the destination of the packet. Processing then moves to step 211 where an entry is made in a database of network connections that are receiving packets. The database maps the source address, protocol identifier and fragmentation identifier from the first fragment to the identifier of the cluster node hosting the application. Processing then moves to step 213 where the first fragment is passed to its destination node.

If at step 207 the received fragment is not the first fragment then processing moves to step 215 where the database is searched for the fragment's header details (source address, protocol identifier and fragmentation identifier). If a match is found in the database then processing moves to step 213 where the fragment is routed to its destination cluster node defined in the database entry.

If at step 215, no match is found in the database then processing moves to step 217 where the fragment is placed in a buffer to await the arrival of the first fragment of the packet. Processing then moves to step 219 where a time-out associated with any buffered fragments is checked. If the database contains fragments whose time-outs have expired then processing moves to step 221 where those fragments are released from the buffer. If no fragments have expired time-outs then processing ends at step 223.

In step 217, if the fragment is identified as the last fragment of a packet then once the fragment is passed to its destination, the entry in the database for the packet is deleted.

As described above, the fragmented packet is reassembled only on the cluster member, which is the actual destination of the IP packet. This removes the processing overhead on the individual member of the cluster for both reassembly and retransmitting. Furthermore, the delay caused by retransmitting the packet from the reassembly node to the actual member is removed because the packet is reassembled on the node that is the actual destination for the IP packet. In the case of real time applications like audio and/or video, reducing the overhead of reassembly and retransmission reduces the chance of packet time-out and therefore can improve the performance of such applications.

It will be understood by those skilled in the art that the apparatus that embodies a part or all of the present invention may be a general purpose device having software arranged to provide a part or all of an embodiment of the invention. The device could be single device or a group of devices and the software could be a single program or a set of programs. Furthermore, any or all of the software used to implement the invention can be communicated via various transmission or storage means such as computer network, floppy disc, CD-ROM or magnetic tape so that the software can be loaded onto one or more devices.

While the present invention has been illustrated by the description of the embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details representative apparatus and method, and illustrative examples shown and described. Accordingly, departures may be made from such details without departure from the spirit or scope of applicant's general inventive concept.

## Claims

1. A method for assembling data packet fragments in a network of nodes, the method comprising the steps of
a) receiving the first fragment of a data packet at a first node in said network;
b) inspecting said first fragment and determining the intended destination node of said fragment; and
c) sending said fragment to said destination node for reassembly at said destination node.

2. A method according to claim 1 further comprising the steps of:
d) making a record of said destination node and a unique identifier for said fragment; and e) using said record to direct other fragments of said data packet to said destination node for reassembly.

3. A method according to claim 2 further comprising the step of:
f) if said other fragments of said packet are received at said first node before said first fragment then storing said other fragments in a buffer until said first fragment is received.

4. A method according to claim 3 further comprising the step of:
g) if said first fragment is not received for a predetermined period then clearing said other fragments from said buffer.

5. A method according to claim 1 in which said network of nodes is a network of computers arranged as a subnet cluster.

6. A method according to claim 1 in which said network of nodes is a network of computers arranged as a virtual subnet cluster.

7. A method according to claim 6 in which the virtual subnet cluster is provided by HP-UX™ Trucluster™ software.

8. A method according to claim 1 in which the data packet is an Internet Protocol (IP) datagram.

9. Apparatus for assembling data packet fragments in a network of nodes, the apparatus comprising:
a) receiving means for receiving the first fragment of a data packet at a first node in said network;
b) inspecting means for inspecting said first fragment and determining the intended destination node of said fragment; and
c) forwarding means for sending said fragment to said destination node for reassembly at said destination node.

10. Apparatus according to claim 9 further comprising:
d) database means for storing a record of said destination node and a unique identifier for said fragment; and said forwarding means is further operable to use said record to direct other fragments of said data packet to said destination node for reassembly.

11. Apparatus according to claim 10 in which said forwarding means is further operable, if said other fragments of said packet are received at said first node before said first fragment, to store said other fragments in a buffer until said first fragment is received.

12. Apparatus according to claim 11 in which said database means is further operable, if said first fragment is not received for a predetermined period, to clear said other fragments from said buffer.

13. Apparatus according to claim 9 in which said network of nodes is a network of computers arranged as a subnet cluster.

14. Apparatus according to claim 9 in which said network of nodes is a network of computers arranged as a virtual subnet cluster.

15. Apparatus according to claim 14 in which the virtual subnet cluster is provided by HP-UX™ Trucluster™ software.

16. Apparatus according to claim 9 in which the data packet is an Internet Protocol (IP) datagram.

17. A computer program or suite of computer programs arranged to enable a computer or a group of computers to carry out the method of claim 1.

18. A computer program or suite of computer programs arranged to enable a computer or a group of computers to provide the apparatus of claim 9.

19. A method reassembling packet fragments in a subnet cluster, the method comprising the steps of:
a) receiving the first packet fragment at a first node in said cluster;
b) inspecting said first fragment and determining the intended destination node of said fragment in said cluster;
c) sending said fragment to said destination node for reassembly at said destination node. d) making a record of said destination node and a unique identifier for said fragment; and e) using said record to direct other fragments of said data packet to said destination node for reassembly.

20. A method according to claim 19 further comprising the step of:
f) if said other fragments of said packet are received at said first node before said first fragment then storing said other fragments in a buffer until said first fragment is received.

21. Apparatus for reassembling packet fragments in a subnet cluster, the apparatus comprising:
a) a packet receiver for receiving packet fragments at a first node in said cluster;
b) a packet handler operable:
to identify the first fragment of a packet and to determining the intended destination node of said first fragment in said cluster;
to make a record of said destination node and a unique identifier for said first fragment; to use said record to identify other fragments of said data packet and to direct said other fragments to said destination node for reassembly; and
c) a packet forwarder operable to send received fragments to said destination node for reassembly at said destination node;

22. Apparatus according to claim 21 in which said fragment handler is further operable, if said other fragments of said packet are received before said first fragment, to store said other fragments in a buffer until said first fragment is received.

23. A method of operating a cluster alias router node for a subnet cluster, the method comprising the steps of:
a) receiving a packet fragment
b) inspecting said fragment and if said fragment is the first fragment for the packet, determining the intended destination node of said first fragment in said cluster;
c) making a record of said destination node, source address, protocol identifier and fragment identifier for said first fragment; and
d) sending said fragment to said destination node for reassembly at said node; and
e) in response to each other fragment of the packet being received, using said record to direct each other fragment to said destination node for reassembly.

24. A cluster alias router node for a subnet cluster comprising:
a) an IP interrupt handler for receiving a packet fragment
b) a packet handler operable to inspect said fragment and if said fragment is the first fragment for the packet, to determine the intended destination node of said first fragment in said cluster;
c) a database operable to make a record of said destination node, source address, protocol identifier and fragment identifier for said first fragment;
d) a packet forwarder operable to send said fragment to said destination node for reassembly at said node; and
e) said packet handler being further operable in response to each other fragment of the packet being received to use said record to direct each other fragment to said destination node for reassembly.
